Europäisches Patentamt

**European Patent Office**

**Office européen des brevets**

(19)

(11) Numéro de publication: **0 069 621**
**A1**

# (12) DEMANDE DE BREVET EUROPEEN

(21) Numéro de dépôt: **82401112.6**

(22) Date de dépôt: **18.06.82**

(51) Int. Cl.³: **B 60 F 3/00**

(30) Priorité: **22.06.81 FR 8112200**

(43) Date de publication de la demande:
**12.01.83 Bulletin 83/2**

(84) Etats contractants désignés:
**BE CH DE GB IT LI NL SE**

(71) Demandeur: **Poncin, Gilles**
**"La Chaumière" 44, Route de Warnécourt**
**F-08000 Prix les Mezieres(FR)**

(72) Inventeur: **Poncin, Gilles**
**"La Chaumière" 44, Route de Warnécourt**
**F-08000 Prix les Mezieres(FR)**

(74) Mandataire: **Loyer, Bertrand et al,**
**Cabinet Pierre Loyer 18, rue de Mogador**
**F-75009 Paris(FR)**

(54) **Perfectionnements aux véhicules tous terrains amphibies.**

(57) Véhicule à la fois tous terrains et amphibie, du type comportant une coque étanche (1) contenant le moteur (7) une boîte de vitesse (8) et un différentiel (6), ladite coque supportant deux ensembles de roues motrices (2, 3, 4) non orientables solidaires en rotation, munies de pneus à basse pression, la commande de direction du véhicule se faisant sur terre par ralentissement des roues d'un côté et accélération des roues de l'autre côté, obtenu en freinant un des demi-arbres (5) d'entraînement. Chaque demi-arbre (5) porte simultanément, les moyens d'entraînement des roues motrices de son côté et d'un dispositif de propulsion sur l'eau, l'entraînement du dispositif de propulsion pouvant être débrayé à volonté.

1

Perfectionnements aux véhicules tous terrains amphibies.

La présente invention concerne des perfectionnements aux véhicules tous terrains amphibies et concerne plus particulièrement les moyens permettant de propulser le véhicule aussi bien sur terre que sur l'eau.

Il est connu de réaliser des véhicules amphibies constitués par une coque étanche, en matière plastique comportant de chaque côté au moins trois roues motrices, l'une des roues motrices étant directement entraînée par un moteur et étant reliée aux autres, par des chaînes par exemple. Il est également connu comme cela est décrit dans le brevet n° 2.197.355 d'employer un groupe moto-propulseur de type connu constitué par un moteur, une boîte de vitesse et un différentiel, ce dernier comportant deux arbres de sorties munis chacun d'un disque de freinage accouplé à une mâchoire de frein, la commande de chaque mâchoire étant indépendante, de sorte que l'on puisse dirigé le véhicule en donnant aux roues motrices de l'un des côtés une vitesse différente de celle des roues de l'autre côté, lesdites roues motrices étant fixes en direction.

La propulsion sur l'eau des véhicules de ce genre est obtenue soit en faisant tourner dans l'eau les roues motrices dont les pneus pourvus de crampon agissent à la manière de roues à aubes, soit en disposant un moyen séparé de propulsion, par exemple une hélice que l'on accouple au moteur lorsque le véhicule est dans l'eau. Dans le premier cas la vitesse obtenue est très faible, dans le deuxième cas le branchement du propulseur nautique nécessite des manoeuvres relativement délicates.

La présente invention a pour objet un véhicule amphibie muni, en plus de roues motrices, de moyens de propulsions sur l'eau, ces moyens assurant à la fois la propulsion et la direction et étant d'une mise en oeuvre instantanée.

Selon la présente invention chaque demi-arbre sortant du différentiel entraîne à la fois l'arbre moteur principal des roues d'un côté du véhicule et un moyen de propulsion nautique débrayable situé du même côté. Ainsi lorsque le véhicule entre dans l'eau, il suffit d'embrayer simultanément les deux propulseurs nautiques et le véhicule est mû à la fois par ses roues et par ces deux propulseurs et la commande de direction est assurée, comme sur terre, en agissant sur l'une ou l'autre des mâchoires de frein.

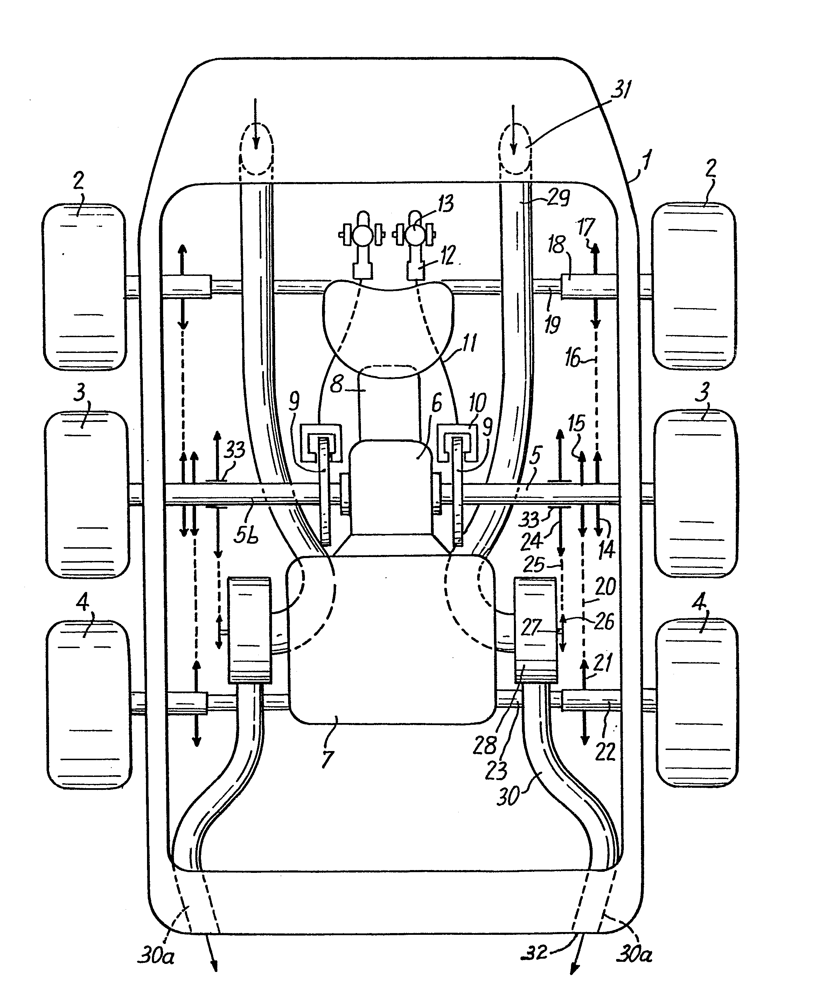

A titre d'exemple non limitatif et pour faciliter la compréhension de l'invention, on a représenté au dessin annexé une vue schématique en plan du dispositif de propulsion mixte selon l'invention.

En se reportant à cette figure, on voit que le véhicule est constitué par une coque 1, étanche, de préférence en matière plastique qui porte de chaque côté trois roues motrices.

Les deux roues motrices centrales 3 sont portées chacune par un demi-arbre moteur 5 qui sortent d'un différentiel 6 attelé à un moteur 7 et une boîte de vitesse 8. Chaque demi-arbre 5 porte un disque de freinage 9 associé à une mâchoire de frein 10 reliée par une canalisation 11 à un maître cylindre 12 commandé par un levier 13.

Chaque demi-arbre 5 porte deux pignons 14 et 15 de mêmes diamètres ; le pignon 14 est relié par une chaîne 16 à un pignon identique 17 solidaire d'un manchon 18, monté à rotation sur un arbre 19, le manchon 18 portant la roue 2. De même chaque pignon 15 est relié par une chaîne 20 à un pignon 21, identique aux précédents, solidaire d'un manchon 22, monté à rotation sur un arbre 23, le manchon 22 portant la roue 4.

On voit que quand le moteur 7 est en fonctionnement, une vitesse de la boîte 8 étant en prise, les deux demi-arbres 5 sont entraînés à la même vitesse ; chaque demi-arbre 5 entraîne directement la roue motrice principale 3 et entraîne à la même vitesse par les pignons 14-17 d'une part et 15-21 d'autre part les deux autres roues motrices 2 et 4. Lorsque le conducteur agit sur un des leviers 13, le levier de droite par exemple, la mâchoire de frein droite 10 est serrée sur le disque 9 correspondant et la vitesse du demi-arbre 5 de droite est diminuée, la vitesse du demi-arbre 5 de gauche étant augmentée d'autant ; il en résulte que les trois roues motrices 2, 3, 4 de droite tournent plus lentement alors que les trois roues motrices de gauche tournent plus vite et le véhicule se dirige vers la droite.

Lorsque les deux leviers 13 sont actionnés simultanément, le véhicule ralentit.

Selon la présente invention chaque demi-arbre 5 porte en plus un pignon 24 qui au moyen d'une chaîne 25 entraîne un pignon 26 qui dans l'exemple représenté est claveté sur l'arbre 27 d'une pompe centrifuge 28 par exemple. La pompe 28 comporte un conduit d'alimentaion 29 et un conduit de refoulement 30. Le conduit d'alimentation 29 est relié à un orifice 31 situé à l'avant en-dessous de la ligne de flottaison tandis que le conduit de refoulement 30 est relié à un orifice d'évacuation 32. De préférence comme cela est représenté, chaque orifice 32 est placé le plus près possible du bord latéral de la coque 1. De préférence également chaque pignon 24 est associé à un dispositif mécanique de crabotage 33, de tout type connu, qui permet de le solidariser ou non, en rotation avec le demi-arbre 5 sur lequel il est monté.

On voit que quand le véhicule pénètre dans l'eau, il suffit d'agir sur la commande de crabotage du manchon 33 pour que les deux pignons 24 entraînent chacun l'une des pompes 28. L'eau est aspirée par les orifices 31 et rejetée par les orifices 32 et le véhicule est propulsé vers l'avant par réaction. Simultanément, les roues 2, 3 et 4 tournent dans l'eau et apportent un effet complémentaire de propulsion. Lorsque le conducteur agit sur l'un des leviers 13, le demi-arbre correspondant 5 ralentit et l'autre accélère comme cela a été expliqué plus haut ; mais cela a également pour conséquence que la pompe 28 correspondante tourne plus vite et a donc un débit plus important tandis que l'autre ralentit et que son débit diminue ; il apparaît donc une dissymétrie dans la poussée exercée par l'eau rejetée par les deux orifices 32 et cette dissymétrie s'ajoute à l'effet décrit plus haut sur les roues pour faire virer sur l'eau le véhicule.

De façon à augmenter les effets de cette dissymétrie, on peut avantageusement, comme cela est représenté sur la figure, orienter les extrémités 30a des deux canalisations 30 de façon qu'elles soient convergentes, les forces de propulsion engendrées étant divergentes. De ce fait, le bras de levier des forces de propulsion par rapport au centre de gravité du véhicule est beaucoup plus important que dans le cas d'une canalisation de sortie parallèle à l'axe longitudinal du véhicule. Dans l'exemple représenté, le bras de levier est pratiquement doublé, ce qui améliore considérablement le braquage sur l'eau.

On peut remplacer les pignons 24 et 26 par des poulies à gorge et la chaîne 25 par une courroie trapézoïdale. Dans ce cas, on peut remplacer le mécanisme de crabotage 33 par un simple tendeur basculant : ainsi, la courroie 25 n'entraîne la poulie 26 que lorsqu'elle est tendue.

De même dans l'exemple représenté le moyen de propulsion sur l'eau est constitué par deux hydro-jets, mais on peut sans pour autant sortir du cadre de la présente invention le remplacer par tous hydro-propulseurs de type connu, par exemple par des hélices. Dans ce cas, il faut prévoir un dispositif de type connu pour assurer la transmission du mouvement rotatif des pignons 24 aux hélices. De plus, dans un tel cas, il est préférable de disposer un mécanisme permettant de monter et de démonter rapidement les hélices de façon à pouvoir les enlever quand un véhicule circule sur terre et les remettre quand il est dans l'eau.

1

Revendications de brevet.

1. Véhicule à la fois tous terrains et amphibie, du type comportant une coque étanche (1) contenant le moteur (7) une boîte de vitesse (8) et un différentiel (6), ladite coque supportant deux ensembles de roues motrices (2, 3, 4) non orientables solidaires en rotation, munies de pneus à basse pression, la commande de direction du véhicule se faisant sur terre par ralentissement des roues d'un côté et accélération des roues de l'autre côté, obtenu en freinant un des demi-arbres (5) d'entraînement, caractérisé par le fait que chaque demi-arbre (5) porte simultanément, les moyens d'entraînement des roues motrices de son côté et d'un dispositif de propulsion sur l'eau, l'entraînement du dispositif de propulsion pouvant être débrayé à volonté.

2. Véhicule selon la revendication 1, dans lequel les deux moyens de propulsion sur l'eau sont déportés latéralement par rapport au plan longitudinal médian du véhicule et sont symétriques l'un de l'autre par rapport à ce plan.

3. Véhicule selon la revendication 2, dans lequel lesdits moyens de propulsion sur l'eau sont disposés obliquement par rapport au plan longitudinal médian du véhicule de telle sorte que les forces de propulsion soient divergentes.

4. Véhicule selon l'une quelconque des revendications précédentes, dans lequel les dispositifs de propulsion sur l'eau sont entraînés chacun par un pignon 24 disposé sur un demi-arbre (5) par l'intermédiaire d'un crabotage (33) permettant de le solidariser ou non en rotation avec ledit demi-arbre (5).

5. Véhicule selon l'une quelconque des revendications 1 à 3, dans lequel les dispositifs de propulsion sur l'eau sont entraînés chacun par une poulie à gorge clavetée sur le demi-arbre correspondant, cette poulie entraînant par une courroie (25) un pignon (26) du dispositif de propulsion lorsque ladite courroie est tendue par un tendeur mobile.

6. Véhicule selon l'une quelconque des revendications précédentes, dans lequel les dispositifs de propulsion sur l'eau sont des dispositifs à réaction du type hydro-jet.

7. Véhicule selon l'une quelconque des revendications 1 à 5, dans lequel les dispositifs de propulsion sur l'eau sont des hélices.

0069621

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-1 356 637   (DOWTY) <br> * en entier * | 1-3,6 | B 60 F   3/00 |
| X | US-A-3 395 672   (RUF) <br> * en entier * | 1,2,7 | |
| D | FR-A-2 197 355   (DICHAMP) | | |

DOMAINES TECHNIQUES RECHERCHES (Int. Cl. ³)

B 60 F   3/00

Le présent rapport de recherche a été établi pour toutes les revendications

| Lieu de la recherche | Date d'achèvement de la recherche | Examinateur |
|---|---|---|
| LA HAYE | 27-09-1982 | SCHMITTER J.M. |